# EUROPEAN PATENT APPLICATION

(11) **EP 4 439 292 A1**
(43) Date of publication of application: **02.10.2024**
(21) Application number: 24164809.6
(22) Date of filing: 20.03.2024
(51) Int. Cl.: G06F 9/48, G06F 9/32, G06F 9/30

(54) **METHOD FOR PROCESSING INTERRUPT AND INTERRUPT PROCESSING DEVICE**

(30) Priority: 30.03.2023 KR 20230042073; 30.05.2023 KR 20230069424
(71) Applicant: Samsung Electronics Co., Ltd., Suwon-si, Gyeonggi-do 16677 (KR)
(72) Inventor: KIM, Jaemin, Suwon-si (KR); LEE, Jimin, Suwon-si (KR); HUH, Junho, Suwon-si (KR)
(74) Representative: Marks & Clerk LLP

(57) **Abstract**

The present disclosure provides methods and apparatuses for interrupt processing. An interrupt processing method includes executing a first interrupt by using a common register, receiving a second interrupt and a second priority of the second interrupt during execution of the first interrupt, comparing a first priority of the first interrupt with the second priority of the second interrupt, generating a first register index corresponding to the second priority of the second interrupt by using a look-up table based on the second priority of the second interrupt being greater than the first priority, and, based on the first register index being a dedicated index, maintaining a context of the first interrupt stored in the common register, assigning a dedicated register for execution of the second interrupt, and executing an interrupt program corresponding to the second interrupt by using the assigned dedicated register. The interrupt program is saved in a memory.

## Description

### BACKGROUND

### 1. Field

The present disclosure relates generally to interrupt processing, and more particularly, to an interrupt processing method and an interrupt processing device capable of processing an interrupt program according to an interrupt request at high speed.

### 2. Description of Related Art

In general, when a processor (e.g., a central processing unit (CPU)) and/or a microprocessor unit (MPU) receives an interrupt request during execution of a process, the processor and/or the MPU may save a context of the process being executed in a memory. For example, the context may include information of registers being used to execute the process. In addition, the processor and/or the MPU may execute an interrupt service routine (ISR) program corresponding to the received interrupt saved in the memory. When the execution of the ISR ends, the processor and/or the MPU may resave (e.g., restore) the context saved in the memory to the registers and may execute the interrupted process again. That is, the processor and/or the MPU may require additional time for a context switch operation that may consist of saving a context of the interrupted process in the memory and reading the context again before and after a period in which the interrupt program is executed for interrupt processing.

For example, a slave device may be configured to set an operation mode of the slave device by processing a command input from a master device that may be received as an interrupt. In such an example, the slave device may need to process the received interrupt within a small amount of time in order to support a high speed operation of a system.

### SUMMARY

Aspects of the present disclosure provide for a fast interrupt processing method of a processor and an interrupt processing device therefor.

Aspects of the present disclosure provide for a fast interrupt processing method according to the priority of received input interrupts and an interrupt processing device therefor.

Aspects of the present disclosure provide for a radio frequency integrated circuit rapidly changing an operation mode of a special function register (SFR) by processing an interrupt received from a master device.

According to an aspect of the present disclosure, an interrupt processing method is provided. The interrupt processing method includes executing a first interrupt by using a common register, receiving a second interrupt and a second priority of the second interrupt during execution of the first interrupt, comparing a first priority of the first interrupt with the second priority of the second interrupt, generating a first register index corresponding to the second priority of the second interrupt by using a look-up table based on the second priority of the second interrupt being greater than the first priority, and, based on the first register index being a dedicated index, maintaining a context of the first interrupt stored in the common register, assigning a dedicated register for execution of the second interrupt, and executing an interrupt program corresponding to the second interrupt by using the assigned dedicated register. The interrupt program is saved in a memory.

According to an aspect of the present disclosure, an interrupt processing device is provided. The interrupt processing device includes an interrupt controller configured to receive interrupts and to output an interrupt to be executed according to a priority, an identifier (ID) of the interrupt to be executed, and the priority of the interrupt to be executed, a memory storing a plurality of interrupt programs, and a microprocessor configured to receive, from the interrupt controller, the interrupt to be executed, the priority of the interrupt, and the ID of the interrupt to be executed, and to execute an interrupt program from among the plurality of interrupt programs corresponding to the interrupt to be executed. The microprocessor includes a control device, a look-up table, a common register, and a dedicated register. The control device is configured to compare the priority of the interrupt to be executed with a priority of an interrupt being executed. The look-up table is configured to generate a register index corresponding to the priority of the interrupt to be executed based on a comparison result indicating that the priority of the interrupt to be executed is greater than the priority of the interrupt being executed. The microprocessor is further configured to, based on the register index being a common index, save, in the memory, a context of the interrupt being executed that is saved in the common register, and execute the interrupt program corresponding to the interrupt to be executed by using the common register, and, based on the register index being a dedicated index, maintain the context of the interrupt being executed that is saved in the common register, assign the dedicated register for execution of the interrupt to be executed, and execute the interrupt program corresponding to the interrupt to be executed by using the assigned dedicated register.

According to an aspect of the present disclosure, a radio frequency integrated circuit is provided. The radio frequency integrated circuit includes an intellectual property (IP) transceiver unit comprising a plurality of functional blocks, a latch unit comprising special function registers storing operation mode setting values of the plurality of functional blocks, and an interrupt processor configured to receive a command from a master through an inter-chip interface, to process an interrupt, and to generate the operation mode setting values. The interrupt processor comprises an interrupt controller, a microprocessor, and a memory. The interrupt controller is configured to output an interrupt, an ID of the interrupt, and a priority corresponding to the received command. The microprocessor comprises a look-up table, a common register, and a dedicated register. The look-up table is configured to assign at least one of the common register and the dedicated register to processing of the received interrupt according to the priority of the received interrupt. The microprocessor is further configured to, based on the common register being assigned, save a context in the memory, and execute a program corresponding to the received interrupt, and, based on the dedicated register being assigned, execute the program corresponding to the received interrupt without switching the context.

The term "intellectual property" (IP) in the present context may refer to a functional block of electronic circuitry or logic. That is, it may refer to electronic circuitry having a particular functionality. For instance, an IP functional block (such as an IP transceiver unit) may be a particular circuitry used to make a field-programmable gate array (FPGA) or application-specific integrated circuit.

According to an aspect of the present disclosure, a slave device is provided. The slave device includes a memory storing instructions, and a processor communicatively coupled to the memory, wherein the processor is configured to execute the instructions to receive interrupt commands from a master through an inter-chip interface, execute interrupts based on priorities of the interrupt commands, change setting values of special function registers based on execution of the interrupts, assign at least one of a common register and a dedicated register to an interrupt to be executed, based on an execution frequency of the interrupt to be executed, based on the dedicated register being assigned, execute a program of the interrupt to be executed without performing a context switch related to an interrupt being executed, and, based on the common register being assigned, perform the context switch related to the interrupt being executed, and execute the program of the interrupt to be executed.

According to an aspect of the present disclosure, an interrupt processing method, to be performed by a processor, is provided. The interrupt processing method includes receiving a second interrupt assigned to a common register, during execution of a first interrupt using the common register, a second priority of the second interrupt having being higher that a first priority of the first interrupt, saving a context of the first interrupt in a memory, executing a first interrupt program corresponding to the second interrupt using the common register, receiving a fourth interrupt assigned to a dedicated register, during execution of a third interrupt using the common register, a fourth priority of the fourth interrupt being higher than a third priority of the third interrupt, and executing a second interrupt program corresponding to the fourth interrupt using the dedicated register, while maintaining a context of the third interrupt in the common register.

At least some of the above and other features of the invention are set out in the claims. Additional aspects may be set forth in part in the description which follows and, in part, may be apparent from the description, and/or may be learned by practice of the presented embodiments.

### BRIEF DESCRIPTION OF THE DRAWINGS

The above and other aspects, features, and advantages of certain embodiments of the present disclosure may be more apparent from the following description taken in conjunction with the accompanying drawings, in which:
FIG. 1 is a timing diagram of interrupt processing of a processor, according to an embodiment;
FIG. 2 shows a ratio of an interrupt execution time and a context switch time for each interrupt ID, according to an embodiment;
FIG. 3 is a block diagram of an interrupt processing device, according to an embodiment;
FIG. 4A shows an embodiment applicable to a look-up table (LUT) of FIG. 3, according to an embodiment;
FIG. 4B is a table showing registers assigned to a register index of FIG. 4A, according to an embodiment;
FIG. 5 is an interrupt processing flowchart, according to an embodiment;
FIG. 6 is a block diagram of an interrupt processing device, according to an embodiment;
FIG. 7 is an interrupt processing flowchart, according to an embodiment;
FIG. 8 is a block diagram of a radio communication system to which an interrupt processing method, according to an embodiment, is applied;
FIG. 9 is a block diagram of a radio frequency integrated circuit to which an interrupt processing method, according to an embodiment, is applied;
FIG. 10 is a block diagram of a latch unit including registers corresponding to intellectual property (IP) blocks of the radio frequency integrated circuit of FIG. 9, according to an embodiment; and
FIG. 11 is a timing diagram according to an interrupt processing method, according to an embodiment.

### DETAILED DESCRIPTION

The following description with reference to the accompanying drawings is provided to assist in a comprehensive understanding of embodiments of the present disclosure defined by the claims and their equivalents. Various specific details are included to assist in understanding, but these details are considered to be examples only. Therefore, those of ordinary skill in the art may recognize that various changes and modifications of the embodiments described herein may be made without departing from the scope of the disclosure. In addition, descriptions of well-known functions and structures are omitted for clarity and conciseness.

The terms such as first, second, and the like may be used to describe various elements, but the elements are not limited by the terms. The terms are used only for the purpose of distinguishing one element from another element. For example, without departing from the scope of the present disclosure, a first element may be referred to as a second element, and similarly, the second element may also be referred to as the first element.

It may be understood that, when an element is referred to as being "connected" or "coupled" to another element, the element may be directly connected or coupled to the other element, or intervening elements may be present. Alternatively, when an element is referred to as being "directly connected" or "directly coupled" to another element, there may be no intervening elements present. Other expressions describing the relationship between elements, such as "between" and "immediately between" or "adjacent to" and "directly adjacent to", may also be interpreted similarly.

Terms used in the specification are used only to describe specific embodiments, and are not intended to limit the present disclosure. Singular expressions may include plural expressions unless the context clearly dictates otherwise. As used herein, it may be understood that terms such as "comprise" or "have" may be intended to designate that a feature, number, step, operation, element, parts, or combinations thereof described in the present disclosure may exist, but may not preclude the presence and/or addition of one or more other features, numbers, steps, operations, elements, parts, or combinations thereof.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment.

It is to be understood that the specific order or hierarchy of blocks in the processes/flowcharts disclosed are an illustration of example approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like, and may also be implemented by or driven by software and/or firmware (configured to perform the functions or operations described herein).

Hereinafter, various embodiments of the present disclosure are described with reference to the accompanying drawings.

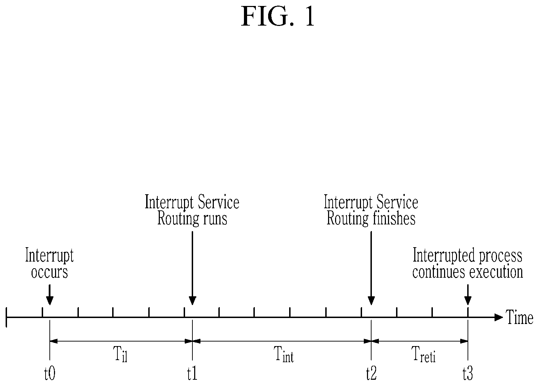

FIG. 1 is a timing diagram of interrupt processing of a processor, according to an embodiment.

Referring to FIG. 1, interrupt execution times t0 to t3 may include an interrupt latency period Tᵢₗ, an interrupt service routine running period Tᵢₙₜ, and an interrupt finishing period Tᵣₑₜᵢ.

A central processing unit (CPU) and/or a microprocessor (MPU) may receive an interrupt request at the time t0. An interrupt request may be a request or command to interrupt a current process being executed and perform another process (e.g. an interrupt program specified by the interrupt).

The interrupt latency period Tᵢₗ may include a time to save information of a process being executed by a processor, which may include the CPU and/or the MPU, in a memory in response to the interrupt request. The information of the process may refer to a context that may include a plurality of pieces of information saved in various registers that may be related to the process being executed. For example, the various registers may include, but not be limited to, a special-purpose register (SPR) including a program counter (PC), a process status register (PSR), a general-purpose register (GPR), and/or another register that may be saving (e.g., storing) values and/or variables that may be needed for an operation of the process. In an embodiment, the processor and/or the MPU may save the values of the various registers in a stack region of the memory during the interrupt latency period Tᵢₗ.

The interrupt service routine running period Tᵢₙₜ may refer to a program execution period corresponding to the received interrupt request. For example, the processor and/or the MPU may process the interrupt request during the interrupt service routine running period Tᵢₙₜ.

The interrupt finishing period Tᵣₑₜᵢ may refer to a time period for the processor and/or the MPU to read a context of an interrupted process saved in the memory and resave the context to various registers again after finishing execution of an interrupt program during the interrupt service routine running period Tᵢₙₜ.

As shown in FIG. 1, the processor and/or the MPU may consume time durations from t0 to t1 and t2 to t3 (e.g., the interrupt latency period Tᵢₗ and the interrupt finishing period Tᵣₑₜᵢ) for context switching and may also consume time duration from t1 to t2 to execute the interrupt program (e.g., the interrupt service routine running period Tᵢₙₜ) in order to finish processing of process the received interrupt.

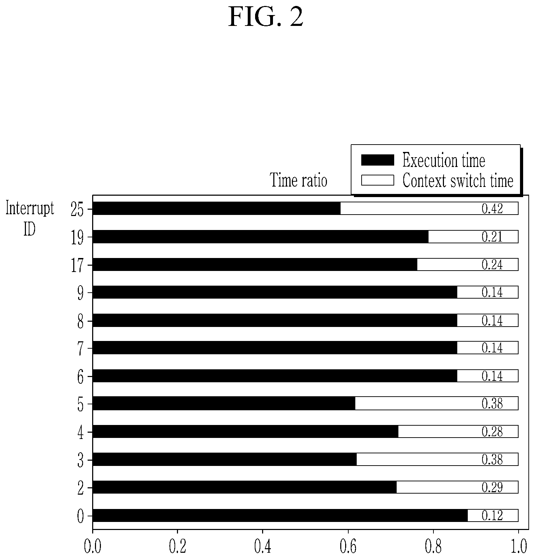

FIG. 2 shows a ratio of an interrupt execution time and a context switch time for each interrupt ID, according to an embodiment.

Referring to FIG. 2, the context switch time for each interrupt identifier (ID) may occupy from about 12% to about 42% of the interrupt processing period. For example, interrupt ID 25 may occupy about 58% of the interrupt processing period to execute an interrupt program (e.g., execution time) and a remaining 42% of the interrupt processing period to execute a context switch (e.g., context switch time). As another example, interrupt ID 0 may occupy about 88% of the interrupt processing period to execute the interrupt program and about 12% of the interrupt processing period to execute the context switch. That is, the context switch time may occupy a relatively large portion of the interrupt processing period. Consequently, the context switch time may need to be minimized and/or reduced in a system requiring high speed interrupt processing. Alternatively or additionally, in a preemption scheduling operation based on the priority of interrupts, fast processing of an interrupt having a high priority may be important, and as such, it may be necessary to minimize the context switch time of the interrupt processing.

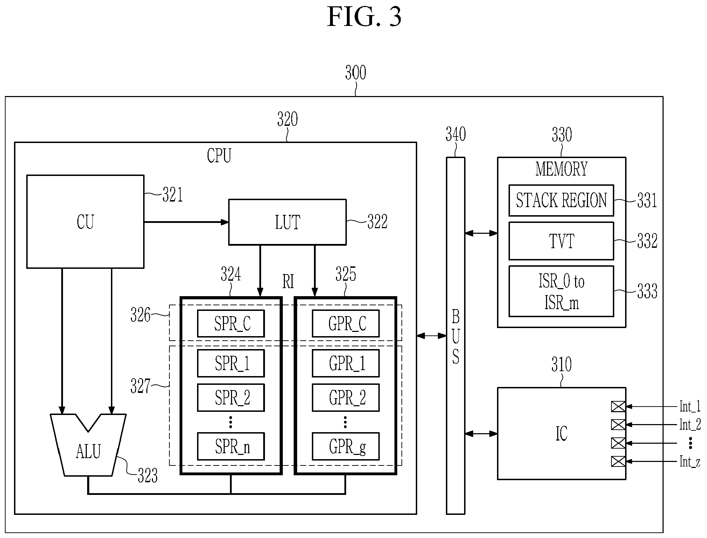

FIG. 3 is a block diagram of an interrupt processing device, according to an embodiment.

Referring to FIG. 3, an interrupt processing device 300 may include an interrupt controller (IC) 310, a CPU core 320, a memory 330, and a bus 340. In an embodiment, the interrupt processing device 300 may be referred to as a processor and/or a microprocessor.

The IC 310 may receive external interrupt requests (e.g., first external interrupt request int_1, second external interrupt request int_2, .... , z-th external interrupt request int_z, where z is a positive integer greater than or equal to one (1)) from the outside. The IC 310 may compare the external interrupt requests int_1 to int_z and output an interrupt request having a relatively high priority to the CPU core 320, according to a determined priority of the interrupt request. For example, the IC 310 may output an interrupt request relating to the external interrupt request that has the highest priority out of the received external interrupt requests int_1 to int_z. For example, the IC 310 may output the interrupt request to the CPU core 320 through the bus 340. The interrupt request outputted by the IC 310, may include an ID corresponding to the interrupt request and a priority (e.g., a priority level) of the interrupt request.

The CPU core 320 may include a control unit (CU) 321, a look-up table (LUT) 322, a special-purpose register (SPR) 324, a general-purpose register (GPR) 325, and an arithmetic logic unit (ALU) 323.

The control unit 321 may compare a priority (e.g., a priority level) of an interrupt being executed with a priority of a received interrupt. If the priority of the received interrupt is lower than the priority of the interrupt being executed, the control unit 321 may continue to execute the interrupt being executed. If the priority of the received interrupt is higher than the priority of the interrupt being executed, the control unit 321 may stop (and/or pause) execution of the interrupt being executed.

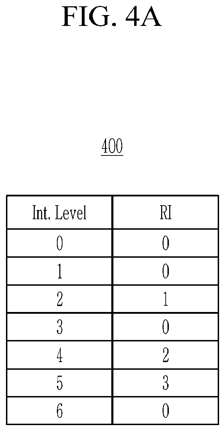

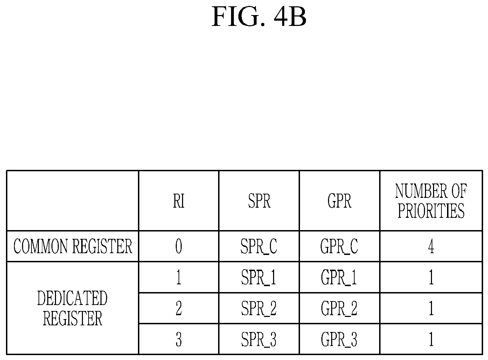

The LUT 322 may be and/or may include a table configured to assign a register index (RI) corresponding to a priority (e.g., a priority level) of an interrupt. For example, the LUT 322 may receive information indicating that a priority of an interrupt received from the control unit 321 is higher than the priority of the interrupt being executed. In such an example, the LUT 322 may receive the priority of the received interrupt and output a register index assigned thereto. In an embodiment, the register index may include a common index (CI) and two or more dedicated indexes (DIs). The common index may correspond to at least two priorities. That is, the common index may be assigned to more than one priority. In an embodiment, each of the dedicated indexes may correspond to one priority (e.g. only one priority). That is, a dedicate index may be assigned to one priority (e.g. only one priority). An example structure of the LUT 322 is described with reference to FIGS. 4A and 4B.

The special-purpose register 324 may include a program counter (PC) configured to save a memory address of a program to be executed next (e.g., immediately after) to the interrupt being executed. Alternatively or additionally, special-purpose register 324 may include a status register (SR) configured to save a status of a process being executed. In an embodiment, the special-purpose register 324 may include a common special-purpose register SPR_C and at least two dedicated special-purpose registers (e.g., first dedicated SPR SPR_1, second dedicated SPR SPR_2, .... , n-th dedicated SPR SPR_n, where n is a positive integer greater than or equal to two (2)).

The general-purpose register 325 may include registers configured to save variables and/or values used by one or more operations performed during execution of a process and/or an interrupt. In an embodiment, the general-purpose register 325 may include a common general-purpose register GPR_C and at least two dedicated general-purpose registers (e.g., first dedicated GPR GPR_1, second dedicated GPR GPR_2, .... , g-th dedicated GPR GPR_g, where g is a positive integer greater than or equal to two (2))

As shown in FIG. 3, a common register 326 may include the common SPR SPR_C and the common GPR GPR_C. A dedicated register 327 may include a plurality of dedicated SPRs (e.g., SPR_1 to SPR_n) and/or a plurality of dedicated GPRs (e.g., GPR_1 to GPR_g). That is, the number of registers in the dedicated register 327 may be greater than the number of registers in the common register 326.

The memory 330 may include a stack region 331, a trap vector table (TVT) 332, and an interrupt service routine (ISR) program saving region 333. The stack region 331 may be and/or may include a region where the CPU core 320 may save the context of the interrupted process during execution of the process. The stack region 331 may operate in a last-in first-out (LIFO) manner in which a last saved context may be output first. The TVT 332 may have a start address of a memory in which an ISR program corresponding to an interrupt ID is saved. For example, the ISR program saving region 333 may save programs (e.g., first ISR program ISR_0, ..., m-th ISR program ISR_m, where m is a positive integer greater than or equal to one (1)) that may be executed for each interrupt ID.

When the register index generated in the LUT 322, based on the received interrupt request, is the common index CI, the interrupt processing device 300 may save, in the stack region 331 of the memory 330, a plurality of pieces of information saved in the common register 326 including the common SPR SPR_C and the common GPR GPR_C being used for the process being executed. The interrupt processing device 300 may then process the received interrupt.

When the register index generated in the LUT 322, based on the received interrupt request, corresponds to at least one of the discrete indexes, the interrupt processing device 300 may use the dedicated SPRs SPR_1 to SPR_n and the dedicated GPRs GPR_1 to GPR_g corresponding to the discrete indexes for an operation required by the received interrupt request, while maintaining the plurality of pieces of information saved in the common register 326 (e.g., the common SPR SPR_C and the common GPR GPR_C) being used for the process being executed. That is, when the dedicated SPRs SPR_1 to SPR_n and the dedicated GPRs GPR_1 to GPR_g are assigned to execute the received interrupt, since contents in the common special purpose register SPR_C and the common general purpose register GPR_C that save the context of the running process are maintained, the interrupt processing device 300 may quickly process the received interrupt without performing an access operation of the stack region 331 of the memory 330 for context switching.

The ALU 323 may perform arithmetic logic operations required for execution of the ISR programs ISR_0 to ISR_m included in the ISR saving region 333 of the memory 330 under the control of the control unit 321. In an embodiment, the ALU 323 may save operation values in the general-purpose register 325.

The number and arrangement of components of the interrupt processing device 300 shown in FIG. 3 are provided as an example. In practice, there may be additional components, fewer components, different components, or differently arranged components than those shown in FIG. 3. Furthermore, two or more components shown in FIG. 3 may be implemented within a single component, or a single component shown in FIG. 3 may be implemented as multiple, distributed components. Alternatively or additionally, a set of (one or more) components shown in FIG. 3 may be integrated with each other, and/or may be implemented as an integrated circuit, as software, and/or a combination of circuits and software.

FIG. 4A shows an embodiment applicable to a LUT of the CPU core 320 of the interrupt processing device 300 of FIG. 3.

Referring to FIG. 4A, a LUT 400 may include and/or may be similar in many respects to the LUT 322 described above with reference to FIG. 3, and may include additional features not mentioned above.

As shown in FIG. 4A, the LUT 400 may receive a priority (e.g., a priority or interrupt level) of an interrupt and output one of a common index and a dedicated index DI as a register index RI. For example, among the register indexes RIs, the register index "0" may be a common index and at least two interrupts having different priorities (e.g., interrupt levels "0", "1", "3", and "6") may be assigned to the common index (e.g., register index "0"). As another example, among the register indexes RIs, the register indexes "1", "2", and "3" may be dedicated indexes, and one (e.g. only one) interrupt level corresponding to one priority (e.g., interrupt level "2", "4", or "5") may be assigned to each of the dedicated indexes DIs. Although FIG. 4A illustrates an example embodiment in which the common index is register index "0" and the DIs are register indexes "1", "2", and "3", the present disclosure is not limited in this regard. That is, another register index may be a common index and/or the other register indexes (e.g., larger amount of indexes, smaller amount of indexes, different indexes) may be dedicated indexes without deviating from the scope of the present disclosure.

The priority (e.g., the priority or interrupt level) of the interrupt may be set by the IC 310 of FIG. 3. In an embodiment, a register index corresponding to the priority (e.g., the priority or interrupt level) of the interrupt in the LUT 400 may be assigned based on a frequency of execution of interrupts. For example, the IC 310 may monitor the number of execution occurrences of each interrupt for a determined period of time (e.g., execution frequencies). In such an example, the IC 310 may assign an interrupt to a discrete index when the interrupt has an execution frequency that meets or exceeds (e.g., greater than or equal to) a threshold value. Alternatively or additionally, the IC 310 may assign an interrupt to a common index when the interrupt has an execution frequency that does not meet (e.g., less than) the threshold value.

FIG. 4B shows common and dedicated registers assigned to the register index of FIG. 4A, according to an embodiment.

Referring to FIG. 4B, the common SPR SPR_C and the common GPR GPR_C of a common register may be assigned to the common index (e.g., register index RI "0"). The four (4) interrupt priorities (e.g., interrupt levels "0", "1", "3", and "6" of FIG. 4A) may be assigned to the common index (e.g., register index RI "0"). That is, the common SPR SPR_C and the common GPR GPR_C may be used when at least one interrupt program corresponding to the common index (e.g., interrupt levels "0", "1", "3", and "6") is executed.

As shown in FIG. 4B, from among the dedicated registers 327, the dedicated SPR SPR_1 and the dedicated GPR GPR_1 may be assigned to the dedicated index DI "1". As such, only interrupts with one priority (e.g., interrupt level "2" of FIG. 4A) may use the dedicated SPR SPR_1 and the dedicated GPR GPR_1. As another example, from among the dedicated registers 327, the dedicated SPR SPR_2 and the dedicated GPR GPR_2 may be assigned to the dedicated index DI "2". Consequently, only interrupts with one priority (e.g., interrupt level "4" of FIG. 4A) may use the dedicated SPR SPR_2 and the dedicated GPR GPR_2. As another example, from among the dedicated registers 327, the dedicated SPR SPR_3 and the dedicated GPR GPR_3 may be assigned to the dedicated index DI "3". As a result, only interrupts with one priority (e.g., interrupt level "5" of FIG. 4A) may use the dedicated SPR SPR_3 and the dedicated GPR GPR_3.

When another interrupt corresponding to a common index is received while an interrupt program corresponding to the common index is being executed, context of common registers including information of an interrupt being executed may need to be saved.

When another interrupt corresponding to a dedicated index DI is received while an interrupt program corresponding to a common index is being executed, since a dedicated index DI different from the common registers including the information of the interrupt being executed is used, the context of the common registers may be maintained and context switch may not need to be performed.

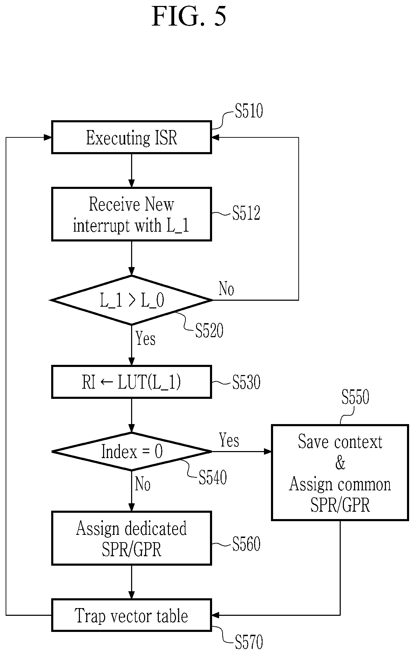

FIG. 5 is an interrupt processing flowchart according to some embodiments of the present disclosure.

Referring to FIG. 5, the CPU core 320 may execute an interrupt program corresponding to a previously received interrupt (operation S510). The previously received interrupt may have an interrupt priority L_0.

The CPU core 320 may receive a new interrupt having an interrupt priority L_1 through the IC 310 (operation S512) while executing the interrupt program in operation S510.

The CPU core 320 may compare the interrupt priority L_1 of the received interrupt with the interrupt priority L_0 of the interrupt program currently being executed (operation S520).

When the interrupt priority L_1 of the received interrupt is lower (e.g., less) than the interrupt priority L_0 of the interrupt program currently being executed (No in operation S520), the CPU core 320 may not output an interrupt priority so as to continue to execute the interrupt program currently being executed. When the interrupt priority L_1 of the received interrupt is higher (e.g., greater) than the interrupt priority L_0 of the interrupt program currently being executed (Yes in operation S520), the CPU core 320 may output the interrupt priority L_1 of the received interrupt to the LUT 322. The LUT 322 may output a register index assigned to the interrupt priority L_1 (operation S530).

The CPU core 320 may determine whether the register index is a common index (e.g., register index is "0") in operation S540. For example, when a common index is assigned to the received interrupt (e.g., when the register index assigned to the received interrupt is "0") (Yes in operation S540), the CPU core 320 may save a context of the interrupt program being executed in the memory 330 and may assign the common register 326 to the received interrupt (operation S550). That is, when the common register 326 is assigned to the interrupt received through the LUT 322, the CPU core 320 may perform an operation of saving the context of the interrupt program being executed in the memory 330.

When a discrete index is assigned to the received interrupt (e.g., the register index assigned to the received interrupt is not "0") (No in operation S540), the CPU core 320 may maintain the context of the interrupt program being executed in the common register 326 as is, and may assign the dedicated register 327 corresponding to the assigned DI to the received interrupt (operation S560). That is, when the dedicated register 327 is assigned to the interrupt received through the LUT 322, since the CPU core 320 may maintain the context of the interrupt program being executed in the common register 326 as is, a memory access for saving the context may be unnecessary, and thus, execution of the received interrupt program may be processed faster.

After the common register 326 is assigned (operation S550) or the dedicated register 327 is assigned (operation S560) for the received interrupt, the CPU core 320 may obtain an ISR program start address corresponding to an ID of the received interrupt from the TVT 332 (operation S570). The CPU core 320 may execute an ISR program (e.g., ISR programs ISR_0 to ISR_m) obtained from the memory 330 (operation S510).

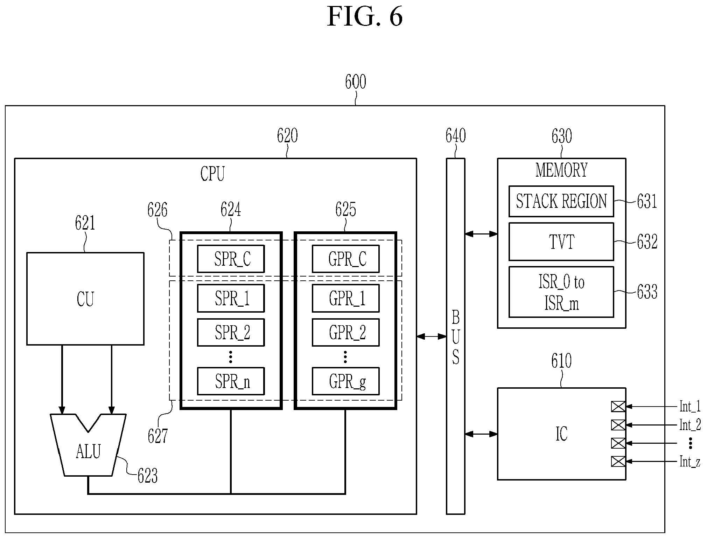

FIG. 6 is a block diagram of an interrupt processing device, according to an embodiment.

Referring to FIG. 6, an interrupt processing device 600 may include and/or may be similar in many respects to the interrupt processing device 300 described above with reference to FIG. 3, and may include additional features not mentioned above. Furthermore, the interrupt processing device 600 may include components that may include and/or may be similar in many respects to corresponding components described above with reference to FIG. 3, and may include additional features not mentioned above. Consequently, repeated descriptions of the interrupt processing device 600 or its components described above with reference to FIG. 3 may be omitted for the sake of brevity.

As shown in FIG. 6, the interrupt processing device 600 may include an IC 610, a CPU core 620, a memory 630, and a bus 640.

The CPU core 620 may include a control unit 621, a special-purpose register 624, a general-purpose register 625, and an ALU 623.

The control unit 621 may compare a priority of an interrupt being executed with a priority of a received interrupt. When the priority of the received interrupt is lower than the priority of the interrupt being executed, the control unit 621 may continue to execute the interrupt being executed. When the priority of the received interrupt is higher than the priority of the interrupt being executed, the control unit 621 may stop (and/or pause) execution of the interrupt being executed.

The control unit 621 may save a context of the interrupt being executed in the memory 630 and may execute an interrupt program corresponding to the received interrupt, based on a priority and a register type assigned to the interrupt being executed, and a priority and a register type assigned to the received interrupt. Alternatively or additionally, the control unit 621 may maintain the context of the interrupt being executed in a register and may execute the interrupt program corresponding to the received interrupt. In an embodiment, the control unit 621 may continue to execute a program of the interrupt being executed.

In an embodiment, the control unit 621 may compare, based on a common register 626, priorities of a first interrupt being executed and a received second interrupt. When the second interrupt is assigned to the common register 626 and the priority of the second interrupt is higher than the priority of the first interrupt, the control unit 621 may save a context of the first interrupt in the memory 630, and may execute an interrupt program corresponding to the second interrupt using the common register 626. That is, during the execution of the first interrupt, which may be assigned to the common register 626, the control unit 621 may receive the second interrupt that may also be assigned to the common register 626 and that has a higher (e.g., greater) priority than the first interrupt. After saving the context of the first interrupt in the memory 630, the control unit 621 may execute the interrupt program corresponding to the second interrupt using the common register 626.

In an embodiment, the control unit 621 may compare, based on the common register 626, priorities of a third interrupt being executed and a received fourth interrupt. When the fourth interrupt is assigned to a dedicated register 627 and the priority of the fourth interrupt is higher than the priority of the third interrupt, the control unit 621 may execute an interrupt program corresponding to the fourth interrupt using the dedicated register 627, while maintaining a context of the third interrupt in the common register 626. That is, while executing the third interrupt using the common register 626, the control unit 621 may receive the fourth interrupt that may be assigned to the dedicated register 627 and that may have a higher (e.g., greater) priority than the third interrupt. In such an embodiment, the control unit 621 may execute the interrupt program corresponding to the fourth interrupt using the dedicated register 627 while maintaining the context of the third interrupt in the common register 626.

In an embodiment, the control unit 621 may compare, based on the common register 626, priorities of a fifth interrupt being executed and a received sixth interrupt. When the sixth interrupt is assigned to the common register 626 and the priority of the fifth interrupt is higher than the priority of the sixth interrupt, the control unit 621 may continue to execute an interrupt program corresponding to the fifth interrupt in the common register 626. That is, while executing the fifth interrupt based on the common register 626, the control unit 621 may receive the sixth interrupt that may be assigned to the common register 626 and that may have a lower priority than the fifth interrupt. In such an embodiment, the control unit 621 may continue to execute the interrupt program corresponding to the fifth interrupt using the common register 626.

In an embodiment, a type of a register corresponding to an interrupt may be assigned based on execution frequencies of the interrupts. For example, the IC 610 may monitor the number of execution occurrences of each interrupt for a determined period of time (e.g., execution frequencies). In such an example, the IC 610 may assign an interrupt to the dedicated register 627 when the interrupt has an execution frequency that meets or exceeds (e.g., greater than or equal to) a threshold value. Alternatively or additionally, the IC 610 may assign interrupts to the common register 626 when the interrupts have execution frequencies that do not meet (e.g., less than) the threshold value.

The number and arrangement of components of the interrupt processing device 600 shown in FIG. 6 are provided as an example. In practice, there may be additional components, fewer components, different components, or differently arranged components than those shown in FIG. 6. Furthermore, two or more components shown in FIG. 6 may be implemented within a single component, or a single component shown in FIG. 6 may be implemented as multiple, distributed components. Alternatively or additionally, a set of (one or more) components shown in FIG. 6 may be integrated with each other, and/or may be implemented as an integrated circuit, as software, and/or a combination of circuits and software.

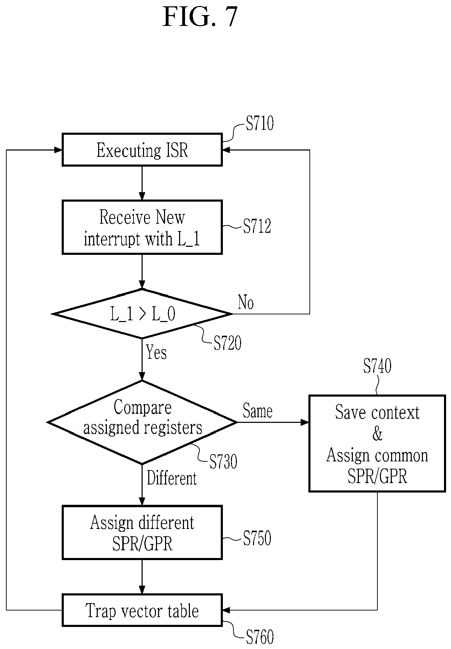

FIG. 7 is an interrupt processing flowchart, according to an embodiment.

Referring to FIG. 7, the CPU core 620 may execute an interrupt program corresponding to a previously received interrupt (operation S710). The previously received interrupt may have an interrupt priority L_0.

The CPU core 620 may receive a new interrupt having an interrupt priority L_1 through the IC 610 (operation S712) while executing the interrupt program in operation S710.

The CPU core 620 may compare the interrupt priority L_1 of the received interrupt with the interrupt priority L_0 of the interrupt program currently being executed (operation S720).

When the interrupt priority L_1 of the received interrupt is lower (e.g., less) than the interrupt priority L_0 of the interrupt program currently being executed (No in operation S720), the CPU core 620 may continue to execute the interrupt program being executed (operation S710).

When the interrupt priority L_1 of the received interrupt is higher (e.g., greater) than the interrupt priority L_0 of the interrupt program currently being executed (Yes in operation S720), the CPU core 620 may compare whether a register corresponding to the received interrupt and a register corresponding to an interrupt of the interrupt program being executed are the same (operation S730).

When the register corresponding to the received interrupt and the register corresponding to the interrupt of the interrupt program being executed are the same (Same in operation S730), the CPU core 620 may save a context of the interrupt program being executed in the memory 330, and may assign the register corresponding to the interrupt of the interrupt program being executed to the received interrupt (operation S740).

When the register corresponding to the received interrupt and the register corresponding to the interrupt of the interrupt program being executed are different (Different in operation S730), the CPU core 620 may maintain the context of the interrupt program being executed as is and may assign the register corresponding to the received interrupt to the received interrupt (operation S750). Consequently, since the CPU core 620 may maintain the context of the interrupt program being executed in the register as is, a memory access for saving the context may be unnecessary, and thus, execution of the received interrupt program may be processed faster.

After the registers are assigned for the received interrupt (operations S750 and S740), the CPU core 620 may obtain an ISR program start address corresponding to an ID of the received interrupt from the TVT 632 (S760). The CPU core 620 may execute an ISR program (e.g., ISR programs ISR_0 to ISR_m) obtained from the memory 630 (operation S710).

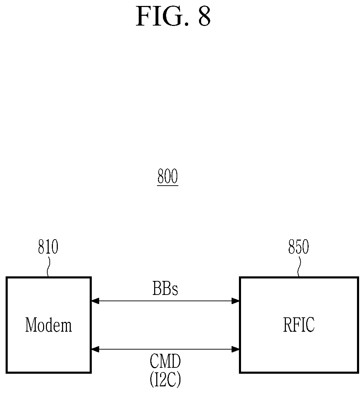

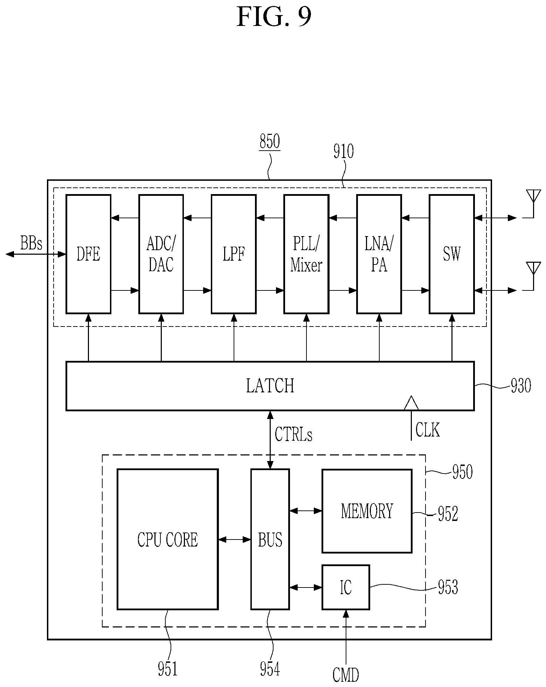

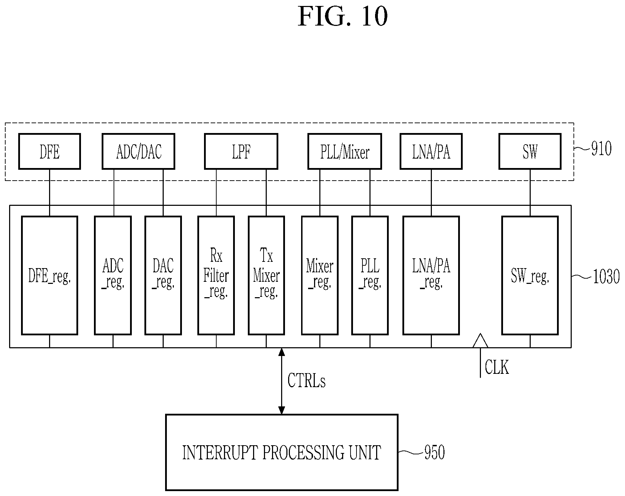

FIG. 8 is a block diagram of a radio communication system to which an interrupt processing method, according to an embodiment, is applied. FIG. 9 is a block diagram of a radio frequency integrated circuit of FIG. 8, according to an embodiment. FIG. 10 shows an embodiment of a latch unit including registers corresponding to intellectual property (IP) blocks of the radio frequency integrated circuit of FIG. 9, according to an embodiment.

Referring to FIG. 8, a radio communication system 800 may include a modem 810 operating as a master (e.g. a primary or manager device) and a radio frequency integrated circuit (RFIC) 850 operating as a slave (e.g. a secondary or worker device). The modem 810 may provide to the RFIC 850 a command CMD using an inter-chip interface protocol such as, but not limited to, an inter-integrated circuit (12C) protocol, a serial peripheral interface (SPI) protocol, and the like. The RFIC 850 may receive the command CMD as an interrupt. In an embodiment, the RFIC 850 may read a program corresponding to the interrupt, which may have been received from an internal CPU core, from a memory. The RFIC 850 may execute the program corresponding to the received interrupt, and may change and/or set operation mode setting values of various internal functional blocks of the RFIC 850. After the operation mode setting values of the functional blocks are changed, according to the execution of the interrupt, the modem 810 and the RFIC 850 may transmit and/or receive baseband digital signals BBs to and/or from each other. For example, in an embodiment in which the radio communication system 800 is a fifth generation (5G) communication system, since an operation mode setting value of the RFIC 850 in a transmission and/or reception state may need to be changed per symbol unit, relatively fast processing of the interrupt corresponding to the command input to the RFIC 850 may be necessary. In particular, interrupt processing for changing the operation mode setting values of the functional blocks of the RFIC 850 performing beamforming in the 5G communication system may need to be processed at a relatively high speed.

Referring to FIG. 9, the RFIC 850 may include an IP transceiver 910, a latch unit 930, and an interrupt processing unit 950.

The IP transceiver 910 may include a plurality of IP functional blocks. The plurality of IP functional blocks may include, but may not be limited to, a switch (SW), a low noise amplifier/power amplifier (LNA/PA), a mixer, a phase locked loop (PLL), a low pass filter (LPF), a digital-to-analog converter (DAC), an analog-to-digital converter (ADC), and a digital front end (DFE).

The latch unit 930 may save operation mode setting values of the respective IP functional blocks constituting the IP transceiver 910. The operation mode setting values of the respective IP functional blocks saved in the latch unit 930 may be generated by the interrupt processing unit 950. For example, the operation mode setting values may be saved in the latch unit 930 in synchronization with an internal reference clock, and provided to the respective IP functional blocks of the IP transceiver 910. Latch unit 930 may include and/or may be similar in many respects to the LUT 322 described above with reference to FIG. 3, and may include additional features not mentioned above

The interrupt processing unit 950 may include and/or may be similar in many respects to at least one of the interrupt processing device 300 of FIG. 3 and the interrupt processing device 600 of FIG. 6, and may include additional features not mentioned above.

As shown in FIG. 9, the interrupt processing unit 950 may include a CPU core 951, a memory 952, an IC 953, and a bus 954. The IC 953 may sequentially receive an input of interrupts in the form of the command CMD through the inter-chip interface between the modem 810 and the RFIC 850. The IC 953 may transfer the input interrupt, a priority thereof, and ID information thereof to the CPU core 951. When the input interrupt has a higher (e.g., greater) priority than an interrupt being executed, the CPU core 951 may generate a register index corresponding to the priority thereof through a LUT (not shown). When the register index is a common index indicating a common register, the CPU core 951 may transfer a context of an interrupt being executed saved in the common register to the memory 952 and save the context in the memory 952. The CPU core 951 may then read an interrupt program corresponding to the interrupt received from the memory 952 and execute the interrupt program by using the common register. When the register index is a DI indicating a dedicated register, the CPU core 951 may maintain the context of the interrupt being executed as is in the common register, and read the interrupt program corresponding to the interrupt received from memory 952. The CPU core 951 may then execute the interrupt program by using the dedicated register.

The interrupt processing unit 950 may execute the interrupt program ISR corresponding to the received interrupt by using the common register or the dedicated register, and may generate control signals CTRLs with the operation mode setting values of the respective functional blocks of the IP transceiver 910. The interrupt processing unit 950 may save the control signals CTRLs in synchronization with an internal clock CLK in the latch unit 930.

The number and arrangement of components of the RFIC 850 shown in FIG. 9 are provided as an example. In practice, there may be additional components, fewer components, different components, or differently arranged components than those shown in FIG. 9. Furthermore, two or more components shown in FIG. 9 may be implemented within a single component, or a single component shown in FIG. 9 may be implemented as multiple, distributed components. Alternatively or additionally, a set of (one or more) components shown in FIG. 9 may be integrated with each other, and/or may be implemented as an integrated circuit, as software, and/or a combination of circuits and software.

Referring to FIG. 10, a latch unit 1030 may include and/or may be similar in many respects to the latch unit 930 of FIG. 9, and may include additional features not mentioned above.

As shown in FIG. 10, the latch unit 1030 may include a plurality of special function registers (SFRs) corresponding to respective IP functional blocks of the IP transceiver 910. For example, a DFE of the IP transceiver 910 may sample data on an operation mode setting value of a DFE register of the latch unit 1030, remove/reduce or compensate for a channel distortion of the sampled signal, filter noise received from a channel, perform digital beamforming, and the like. As another example, the ADC/DAC of the IP transceiver 910 may sample information, reference errors, and the like, according to operation mode setting values of an ADC register and/or a DAC register of the latch unit 1030. That is, based on the operation mode setting values, the DAC of the IP transceiver 910 may convert the input baseband digital signals BBs into intermediate band signals, and/or the ADC of the IP transceiver 910 may convert the intermediate band signals into the baseband digital signals BBs.

In the LPF of the IP transceiver 910, a frequency band, a gain, and the like, may be set according to operation mode setting values of a reception filter register Rx Filter_reg of the latch unit 1030 and/or a transmission filter register Tx Filter_reg of the latch unit 1030. For example, based on the operation mode setting values, the LPF of the IP transceiver 910 may perform a filtering operation on an analog signal. In the mixer and the PLL of the IP transceiver 910, frequency adjustment information, phase information of the PLL, and the like, may be respectively set according to operation mode setting values of a mixer register Mixer_reg of the latch unit 1030 and/or a PLL register PLL_reg of the latch unit 1030. For example, based on the operation mode setting values, the mixer and the PLL of the IP transceiver 910 may perform frequency/phase adjustment operations on the analog signal. Gain information of the LNA/PA of the IP transceiver 910 may be changed according to operation mode setting values set in an amplifier register LNA/PA_reg of the latch unit 1030. For example, the LNA/PA may perform a power amplification operation according to the operation mode setting values. In the switch of the IP transceiver 910, an antenna switch connection operation may be controlled according to operation mode setting values of a switch register SW_reg of the latch unit 1030. For example, beamforming operations may be implemented in various ways by switch of the IP transceiver 910, according to a corresponding connection structure and/or the operation mode setting values.

The latch unit 1030 may synchronize the control signals CTRLs, which may be the result of processing the interrupt, received from an interrupt processing unit 950 with an internal clock, and save the control signals CTRLs in the SFR of the respective IP functional blocks. When the control signals CTRLs generated after executing the interrupt program corresponding to the interrupt received from the interrupt processing unit 950 are synchronized and saved in the corresponding SFRs, interrupt processing of the interrupt may be determined to be finished (e.g., completed).

An ISR program corresponding to the received interrupt program may be saved in a memory 952 of the interrupt processing unit 950. In an embodiment, setting values of the SFRs of the function blocks of the IP transceiver 910 may be changed according to execution of each ISR program. The memory 952 may be configured as a static random access memory (SRAM), however the present disclosure is not limited thereto. A CPU core 951 of the interrupt processing unit 950 may be a part of at least one processor including a CPU and/or a graphics processing unit (GPU).

The number and arrangement of components of the latch unit 1030 shown in FIG. 10 are provided as an example. In practice, there may be additional components, fewer components, different components, or differently arranged components than those shown in FIG. 10. Furthermore, two or more components shown in FIG. 10 may be implemented within a single component, or a single component shown in FIG. 10 may be implemented as multiple, distributed components. Alternatively or additionally, a set of (one or more) components shown in FIG. 10 may be integrated with each other, and/or may be implemented as an integrated circuit, as software, and/or a combination of circuits and software.

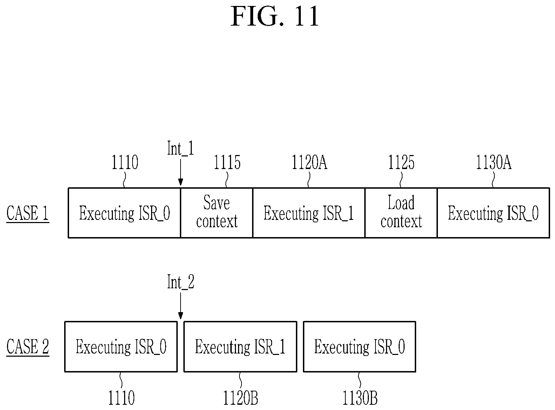

FIG. 11 is a timing diagram of an interrupt processing method, according to an embodiment.

FIG. 11 shows a timing diagram in which a second interrupt Int_1 (CASE 1) or a third interrupt Int_2 (CASE 2) is input and processed while a first interrupt Int_0 is executed (Executing ISR_0 1110) by using a common register.

For example, in first case CASE 1, a priority of the second interrupt Int_1 may be assigned to a common index in the LUT 322. In such an example, before the second interrupt Int_1 is executed (Executing ISR_1 1120A), a context save operation (Save context 1115) may be performed in which a context of the first interrupt Int_0 being executed that may be saved in the common register 326 may be moved to and saved in a memory 330. In addition, prior to returning to executing the first interrupt Int_0 (Executing ISR_0 1130A), a load context operation (Load context 1125) may be performed in which the context of the first interrupt Int_0 that may be saved in the memory 330 is restored in the common register 326.

As another example, in second case CASE 2, a priority of the third interrupt Int_2 may be assigned to a DI in the LUT 322. In such an example, the context of the first interrupt Int_0 being executed that may be saved in the common register 326 may be maintained as is and the third interrupt Int_2 may be performed (Executing ISR_1 1120B) by using a dedicated register assigned by the DI. As the context of the first interrupt Int_0 may be maintained as is in the common register 326, execution of the first interrupt Int_0 (Executing ISR_0) may resume without the need of a load context operation.

That is, as the DI is used to process an interrupt having a high frequency of execution, it may be possible to implement a faster interrupt processing system by removing a process of saving and restoring the context, when compared to a related interrupt processing system.

According to aspects of the present disclosure, an interrupt processing device may perform processing of an interrupt having a high priority and a high frequency of execution at a relatively high speed, thereby improving a high speed operation performance of a system in which a slave may need a high speed operation mode change setting from a master.

Embodiments are set out in the following clauses:
Clause 1. An interrupt processing method, comprising:
   executing a first interrupt by using a common register;
   receiving a second interrupt and a second priority of the second interrupt during execution of the first interrupt;
   comparing a first priority of the first interrupt with the second priority of the second interrupt;
   generating a first register index corresponding to the second priority of the second interrupt by using a look-up table based on the second priority of the second interrupt being greater than the first priority; and
   based on the first register index being a dedicated index, maintaining a context of the first interrupt stored in the common register, assigning a dedicated register for execution of the second interrupt, and executing an interrupt program corresponding to the second interrupt by using the assigned dedicated register, the interrupt program being saved in a memory.
Clause 2. The interrupt processing method of clause 1, further comprising:
   receiving a third interrupt and a third priority of the third interrupt during the execution of the first interrupt;
   comparing the first priority of the first interrupt with the third priority of the third interrupt;
   generating a second register index corresponding to the third priority of the third interrupt by using the look-up table based on the third priority of the third interrupt being greater than the first priority; and
   based on the second register index being a common index, saving the context of the first interrupt in the memory, and executing the interrupt program corresponding to the third interrupt by using the common register.
Clause 3. The interrupt processing method of clause 2, further comprising:
   finishing execution of the interrupt program of the third interrupt by using a special purpose register and a general purpose register of the common register;
   restoring the context of the first interrupt saved in the memory to the special purpose register and the general purpose register of the common register; and
   resuming the execution of the first interrupt.
Clause 4. The interrupt processing method of any preceding clause, wherein the look-up table comprises a common index and at least two dedicated indexes, and wherein the interrupt processing method further comprises:
   assigning the common index to at least two interrupt priorities, and
   assigning each dedicated index of the at least two dedicated indexes to a distinct interrupt priority.
Clause 5. The interrupt processing method of clause 4, further comprising:
   determining a first plurality of interrupts corresponding to the at least two interrupt priorities assigned to the common index, based on first execution frequencies of the first plurality of interrupts; and
   determining a second plurality of interrupts corresponding to the distinct interrupt priorities assigned to the at least two dedicated indexes, based on second execution frequencies of the second plurality of interrupts.
Clause 6. The interrupt processing method of clause 5, wherein the first execution frequencies of the first plurality of interrupts are smaller than the second execution frequencies of the second plurality of interrupts.
Clause 7. The interrupt processing method of any preceding clause, further comprising:
   receiving an identifier of the second interrupt; and
   obtaining, by using a trap vector table, an address of the memory in which the interrupt program corresponding to the second interrupt is saved by using the identifier of the second interrupt.
Clause 8. The interrupt processing method of any preceding clause, wherein each of the common register and the dedicated register comprise a special purpose register and a general purpose register, and
   wherein the interrupt processing method further comprises:
   saving first operation values of the execution of the first interrupt in the general purpose register of the common register; and
   saving second operation values of the execution of the second interrupt in the general purpose register of the dedicated register.
Clause 9. The interrupt processing method of clause 8, further comprising:
   finishing execution of the interrupt program of the second interrupt by using the special purpose register and the general purpose register of the dedicated register; and
   resuming the execution of the first interrupt by using the context saved in the common register.
Clause 10. The interrupt processing method of any preceding clause, further comprising:
   continuing the execution of the first interrupt based on the second priority of the second interrupt being less than the first priority of the first interrupt.
Clause 11. The interrupt processing method of any preceding clause, wherein the receiving of the second interrupt during the execution of the first interrupt comprises receiving a command from an outside through an inter-chip interface.
Clause 12. An interrupt processing device, comprising:
   an interrupt controller configured to receive interrupts and to output an interrupt to be executed according to a priority, an identifier (ID) of the interrupt to be executed, and the priority of the interrupt to be executed;
   a memory storing a plurality of interrupt programs; and
   a microprocessor configured to receive, from the interrupt controller, the interrupt to be executed, the priority of the interrupt, and the ID of the interrupt to be executed, and to execute an interrupt program from among the plurality of interrupt programs corresponding to the interrupt to be executed,
   wherein the microprocessor comprises a control device, a look-up table, a common register, and a dedicated register,
   wherein the control device is configured to compare the priority of the interrupt to be executed with a priority of an interrupt being executed,
   wherein the look-up table is configured to generate a register index corresponding to the priority of the interrupt to be executed based on a comparison result indicating that the priority of the interrupt to be executed is greater than the priority of the interrupt being executed, and
   wherein the microprocessor is further configured to:
      based on the register index being a common index, save, in the memory, a context of the interrupt being executed that is saved in the common register, and execute the interrupt program corresponding to the interrupt to be executed by using the common register; and
      based on the register index being a dedicated index, maintain the context of the interrupt being executed that is saved in the common register, assign the dedicated register for execution of the interrupt to be executed, and execute the interrupt program corresponding to the interrupt to be executed by using the assigned dedicated register.
Clause 13. The interrupt processing device of clause 12, wherein the look-up table comprises the common index and at least two dedicated indexes.
Clause 14. The interrupt processing device of clause 13, wherein at least two interrupt priorities are assigned to the common index, and a distinct interrupt priority is assigned to each of the at least two dedicated indexes.
Clause 15. The interrupt processing device of clause 14, wherein a first execution frequency of a first interrupt assigned to the common index is less than a second execution frequency of a second interrupt assigned to a dedicated index of the at least two dedicated indexes.
Clause 16. The interrupt processing device of clause 15, wherein each of the common register and the dedicated register comprises a special purpose register and a general purpose register,
   wherein the special purpose register comprises a program counter and a status register, and
   wherein the general purpose register comprises registers configured to save operation values of execution of the first interrupt or the second interrupt.
Clause 17. The interrupt processing device of clause 16, wherein a number of dedicated registers is greater than a number of common registers.
Clause 18. A radio frequency integrated circuit, comprising:
   an intellectual property (IP) transceiver unit comprising a plurality of functional blocks;
   a latch unit comprising special function registers storing operation mode setting values of the plurality of functional blocks; and
   an interrupt processor configured to receive a command from a master through an inter-chip interface, to process an interrupt, and to generate the operation mode setting values,
   wherein the interrupt processor comprises an interrupt controller, a microprocessor, and a memory,
   wherein the interrupt controller is configured to output an interrupt, an identifier (ID) of the interrupt, and a priority corresponding to the received command,
   wherein the microprocessor comprises a look-up table, a common register, and a dedicated register,
   wherein the look-up table is configured to assign at least one of the common register and the dedicated register to processing of the received interrupt according to the priority of the received interrupt, and
   wherein the microprocessor is further configured to:
      based on the common register being assigned, save a context in the memory, and execute a program corresponding to the received interrupt; and
      based on the dedicated register being assigned, execute the program corresponding to the received interrupt without switching the context.
Clause 19. The radio frequency integrated circuit of clause 18, wherein the microprocessor is further configured to:
   generate control signals after executing the program of the received interrupt, the control signals being synchronized with an internal clock and saved in the special function registers.
Clause 20. The radio frequency integrated circuit of clause 18 or clause 19, wherein each of the common register and the dedicated register comprises a special purpose register and a general purpose register,
   wherein the special purpose register comprises a program counter and a status register, and
   wherein the general purpose register comprises registers configured to save operation values of execution of a first interrupt or a second interrupt.
Clause 21. The radio frequency integrated circuit of any of clauses 18-20, wherein the look-up table is configured to assign an interrupt to a dedicated index, based on the interrupt having a number of execution occurrences during an operation period of the radio frequency integrated circuit that exceed a threshold value.
Clause 22. A slave device, comprising:
   a memory storing instructions; and
   a processor communicatively coupled to the memory, wherein the processor is configured to execute the instructions to:
      receive interrupt commands from a master through an inter-chip interface;
      execute interrupts based on priorities of the interrupt commands;
      change setting values of special function registers based on execution of the interrupts;
      assign at least one of a common register and a dedicated register to an interrupt to be executed, based on an execution frequency of the interrupt to be executed;
      based on the dedicated register being assigned, execute a program of the interrupt to be executed without performing a context switch related to an interrupt being executed; and
      based on the common register being assigned, perform the context switch related to the interrupt being executed, and execute the program of the interrupt to be executed.
Clause 23. The slave device of clause 22, wherein the slave device is a radio frequency integrated circuit.
Clause 24. An interrupt processing method to be performed by a processor, comprising:
   receiving a second interrupt assigned to a common register, during execution of a first interrupt using the common register, a second priority of the second interrupt having being higher that a first priority of the first interrupt;
   saving a context of the first interrupt in a memory;
   executing a first interrupt program corresponding to the second interrupt using the common register;
   receiving a fourth interrupt assigned to a dedicated register, during execution of a third interrupt using the common register, a fourth priority of the fourth interrupt being higher than a third priority of the third interrupt; and
   executing a second interrupt program corresponding to the fourth interrupt using the dedicated register, while maintaining a context of the third interrupt in the common register.
Clause 25. The interrupt processing method of clause 24, further comprising:
   monitoring an execution frequency of each interrupt of a plurality of interrupts, the plurality of interrupts comprising the first interrupt, the second interrupt, the third interrupt, and the fourth interrupt; and
   determining a register to which each of the plurality of interrupts is to be assigned based on the execution frequency.
Clause 26. The interrupt processing method of clause 24 or clause 25, wherein each of the common register and the dedicated register comprise a special purpose register and a general purpose register, and
   wherein the interrupt processing method further comprises:
   saving first operation values of the execution of the first interrupt in the general purpose register of the common register; and;
   saving second operation values of the execution of the second interrupt in the general purpose register of the dedicated register.

Although the embodiments of the present disclosure have been described with reference to the accompanying drawings, it will be understand by those skilled in the art to which the present disclosure pertains that the present disclosure may be embodied in other specific forms without changing the technical operation or essential features thereof. Therefore, the embodiments described above should be understood in all respects as illustrative and not restrictive.

## Claims

1. An interrupt processing method, comprising:
executing a first interrupt by using a common register;
receiving a second interrupt and a second priority of the second interrupt during execution of the first interrupt;
comparing a first priority of the first interrupt with the second priority of the second interrupt;
generating a first register index corresponding to the second priority of the second interrupt by using a look-up table based on the second priority of the second interrupt being greater than the first priority; and
based on the first register index being a dedicated index, maintaining a context of the first interrupt stored in the common register, assigning a dedicated register for execution of the second interrupt, and executing an interrupt program corresponding to the second interrupt by using the assigned dedicated register, the interrupt program being saved in a memory.

2. The interrupt processing method of claim 1, further comprising:
receiving a third interrupt and a third priority of the third interrupt during the execution of the first interrupt;
comparing the first priority of the first interrupt with the third priority of the third interrupt;
generating a second register index corresponding to the third priority of the third interrupt by using the look-up table based on the third priority of the third interrupt being greater than the first priority; and
based on the second register index being a common index, saving the context of the first interrupt in the memory, and executing the interrupt program corresponding to the third interrupt by using the common register.

3. The interrupt processing method of claim 2, further comprising:
finishing execution of the interrupt program of the third interrupt by using a special purpose register and a general purpose register of the common register;
restoring the context of the first interrupt saved in the memory to the special purpose register and the general purpose register of the common register; and
resuming the execution of the first interrupt.

4. The interrupt processing method of any preceding claim, wherein the look-up table comprises a common index and at least two dedicated indexes, and
wherein the interrupt processing method further comprises:
assigning the common index to at least two interrupt priorities, and
assigning each dedicated index of the at least two dedicated indexes to a distinct interrupt priority.

5. The interrupt processing method of claim 4, further comprising:
determining a first plurality of interrupts corresponding to the at least two interrupt priorities assigned to the common index, based on first execution frequencies of the first plurality of interrupts; and
determining a second plurality of interrupts corresponding to the distinct interrupt priorities assigned to the at least two dedicated indexes, based on second execution frequencies of the second plurality of interrupts.

6. The interrupt processing method of claim 5, wherein the first execution frequencies of the first plurality of interrupts are smaller than the second execution frequencies of the second plurality of interrupts.

7. The interrupt processing method of any preceding claim, further comprising:
receiving an identifier of the second interrupt; and
obtaining, by using a trap vector table, an address of the memory in which the interrupt program corresponding to the second interrupt is saved by using the identifier of the second interrupt.

8. The interrupt processing method of any preceding claim, wherein each of the common register and the dedicated register comprise a special purpose register and a general purpose register, and
wherein the interrupt processing method further comprises:
saving first operation values of the execution of the first interrupt in the general purpose register of the common register; and
saving second operation values of the execution of the second interrupt in the general purpose register of the dedicated register.

9. The interrupt processing method of claim 8, further comprising:
finishing execution of the interrupt program of the second interrupt by using the special purpose register and the general purpose register of the dedicated register; and
resuming the execution of the first interrupt by using the context saved in the common register.

10. The interrupt processing method of any preceding claim, further comprising:
continuing the execution of the first interrupt based on the second priority of the second interrupt being less than the first priority of the first interrupt.

11. The interrupt processing method of any preceding claim, wherein the receiving of the second interrupt during the execution of the first interrupt comprises receiving a command from an outside through an inter-chip interface.

12. An interrupt processing device, comprising:
an interrupt controller configured to receive interrupts and to output an interrupt to be executed according to a priority, an identifier, ID, of the interrupt to be executed, and the priority of the interrupt to be executed;
a memory storing a plurality of interrupt programs; and
a microprocessor configured to receive, from the interrupt controller, the interrupt to be executed, the priority of the interrupt, and the ID of the interrupt to be executed, and to execute an interrupt program from among the plurality of interrupt programs corresponding to the interrupt to be executed,
wherein the microprocessor comprises a control device, a look-up table, a common register, and a dedicated register,
wherein the control device is configured to compare the priority of the interrupt to be executed with a priority of an interrupt being executed,
wherein the look-up table is configured to generate a register index corresponding to the priority of the interrupt to be executed based on a comparison result indicating that the priority of the interrupt to be executed is greater than the priority of the interrupt being executed, and
wherein the microprocessor is further configured to:
based on the register index being a common index, save, in the memory, a context of the interrupt being executed that is saved in the common register, and execute the interrupt program corresponding to the interrupt to be executed by using the common register; and
based on the register index being a dedicated index, maintain the context of the interrupt being executed that is saved in the common register, assign the dedicated register for execution of the interrupt to be executed, and execute the interrupt program corresponding to the interrupt to be executed by using the assigned dedicated register.

13. A radio frequency integrated circuit, comprising:
an intellectual property, IP, transceiver unit comprising a plurality of functional blocks;
a latch unit comprising special function registers storing operation mode setting values of the plurality of functional blocks; and
an interrupt processor configured to receive a command from a master through an inter-chip interface, to process an interrupt, and to generate the operation mode setting values,
wherein the interrupt processor comprises an interrupt controller, a microprocessor, and a memory,
wherein the interrupt controller is configured to output an interrupt, an identifier, ID, of the interrupt, and a priority corresponding to the received command,
wherein the microprocessor comprises a look-up table, a common register, and a dedicated register,
wherein the look-up table is configured to assign at least one of the common register and the dedicated register to processing of the received interrupt according to the priority of the received interrupt, and
wherein the microprocessor is further configured to:
based on the common register being assigned, save a context in the memory, and execute a program corresponding to the received interrupt; and
based on the dedicated register being assigned, execute the program corresponding to the received interrupt without switching the context.

14. A slave device, comprising:
a memory storing instructions; and
a processor communicatively coupled to the memory, wherein the processor is configured to execute the instructions to:
receive interrupt commands from a master through an inter-chip interface;
execute interrupts based on priorities of the interrupt commands;
change setting values of special function registers based on execution of the interrupts;
assign at least one of a common register and a dedicated register to an interrupt to be executed, based on an execution frequency of the interrupt to be executed;
based on the dedicated register being assigned, execute a program of the interrupt to be executed without performing a context switch related to an interrupt being executed; and
based on the common register being assigned, perform the context switch related to the interrupt being executed, and execute the program of the interrupt to be executed.

15. An interrupt processing method to be performed by a processor, comprising:
receiving a second interrupt assigned to a common register, during execution of a first interrupt using the common register, a second priority of the second interrupt having being higher that a first priority of the first interrupt;
saving a context of the first interrupt in a memory;
executing a first interrupt program corresponding to the second interrupt using the common register;
receiving a fourth interrupt assigned to a dedicated register, during execution of a third interrupt using the common register, a fourth priority of the fourth interrupt being higher than a third priority of the third interrupt; and
executing a second interrupt program corresponding to the fourth interrupt using the dedicated register, while maintaining a context of the third interrupt in the common register.
